# EUROPEAN PATENT APPLICATION

(11) **EP 2 869 142 A2**
(43) Date of publication of application: **06.05.2015**
(21) Application number: 14190453.2
(22) Date of filing: 27.10.2014
(51) Int. Cl.: G04G 21/04

(54) **Measurement information management system, measurement device, measurement information management method, and measurement information management program**

(30) Priority: 29.10.2013 JP 2013224553
(71) Applicant: Seiko Epson Corporation, Tokyo 163-0811 (JP)
(72) Inventor: Morita, Hiroyuki, Nagano, 392-8502 (JP); Hirabayashi, Shinji, Nagano, 392-8502 (JP); Nakadaira, Michio, Nagano, 392-8502 (JP)
(74) Representative: Hoffmann Eitle

(57) **Abstract**

A measurement information management system includes: a measurement device; and a mobile information device which performs wireless communication with the measurement device, in which the measurement device includes a detail information generation unit which generates detail information including position information corresponding to time information which is the time when the position information is measured, a title information transmission unit which transmits title information for identifying the detail information to the mobile information device, and a detail information transmission unit which transmits the detail information to the mobile information device according to the transmission request signal, and the mobile information device includes a display control unit which displays the title information transmitted from the measurement device on a display unit, and a detail information request unit which transmits a transmission request signal of the detail information corresponding to the title information selected from the title information displayed on the display unit to the measurement device.

## Description

### BACKGROUND

### 1. Technical Field

The present invention relates to a measurement information management system which manages information measured by a measurement device, a measurement device, a measurement information management method, and a measurement information management program.

### 2. Related Art

In the related art, for example, an electronic watch which includes a global positioning system (GPS) sensor and can perform measurement of position information, has been known (for example, see JP-A-2008-9666).

The electronic watch disclosed in JP-A-2008-9666 is held in a relay device at the time of charging. By connecting the relay device to an information device such as a personal computer (PC) through a connection cable in this state, it is possible to transfer various information items between the electronic watch and the information device.

However, the electronic watch including the GPS sensor can measure position information (latitude and longitude) and time information. Accordingly, in a case where a user runs or walks wearing the electronic watch, for example, it is possible to generate measurement data items such as time information such as measurement starting time, running time, or elapsed time, a movement distance, a movement speed, time, or calorie consumption, based on the time information or position information measured by the electronic watch, and to record the measurement data items in a storage unit. In order to store and manage the measurement data items recorded in the electronic watch and use the stored data items, the measurement data items stored in the electronic watch are transmitted (data transfer) to the information device such as a PC from the electronic watch.

Meanwhile, it is desirable to use wireless communication for the communication between the electronic watch and the information device, from a viewpoint of convenience. In addition, since the electronic watch is driven by a battery, it is desirable to lower power consumption. Accordingly, a low-power wireless communication technology such as Bluetooth low energy (BLE) as one standard of Bluetooth (trademark) which can lower power consumption, is required to be used in the communication between the electronic watch and the information device.

However, since the position information is measured every second, for example, a data volume increases. In a case where the low-power wireless communication technology is used in the electronic watch, a communication speed decreases, and accordingly, a longer time is taken until the data transfer from the electronic watch to the information device is completed. Since it is difficult to display the measurement data being transferred and a process result based on this measurement data on a display unit of the information device until the data transfer is completed, it is difficult for a user to immediately check the measurement data or the process result, when the time of the data transfer becomes longer. In addition, in a case of performing near field wireless communication such as BLE being continued for a long time, it is necessary to pay attention to a distance between the electronic watch and the information device not becoming longer. Further, there is also a possibility of disconnection due to an effect of external noise or erroneous disconnection operation during the communication. As described above, the continuation of the communication for a long time may causes inconvenient problems for a user.

### SUMMARY

An advantage of some aspects of the invention is to provide a measurement information management system, a measurement device, a measurement information management method, and a measurement information management program which can improve convenience.

An aspect of the invention is directed to a measurement information management system including: a measurement device; and an information device which performs wireless communication with the measurement device, in which the measurement device includes a storage unit, a clock unit which measures the time, a measurement unit which measures at least position information, a detail information generation unit which generates detail information including at least the position information corresponding to time information which is the time when the position information is measured, a storage control unit which stores the detail information in the storage unit, a title information generation unit which generates title information for identifying the detail information, a title information transmission unit which transmits the title information to the information device, and a detail information transmission unit which transmits the detail information to the information device according to a transmission request signal transmitted from the information device, and the information device includes a display unit, a display control unit which displays the title information transmitted from the measurement device on the display unit, an input unit which determines that a selection operation and a transfer operation of the title information to be a transfer target from the title information items displayed on the display unit are performed, and outputs an operation signal, and a detail information request unit which transmits a transmission request signal of the detail information corresponding to the title information selected according to the operation signal output from the input unit, to the measurement device.

According to the aspect of the invention, the detail information generation unit generates the detail information including at least the position information corresponding to the time information which is the time when the position information of a current location (for example, latitude and longitude) is measured by a GPS sensor or the like. The storage control unit stores the detail information in the storage unit. The title information generation unit generates the title information for identifying the detail information.

For example, when the transmission request signal of the title information transmitted from the information device is received, the title information transmission unit transmits the title information to the information device. When the information device receives the title information, the display control unit displays the received title information on the display unit. Accordingly, a user can identify the detail information generated by the measurement device, by browsing the display unit.

When a user operates the input unit and performs the selection operation and the transfer operation of the title information to be a transfer target from the title information items displayed on the display unit, the input unit determines this operation and outputs the operation signal. By doing so, the detail information request unit transmits the transmission request signal of the detail information corresponding to the title information selected according to the operation signal, to the measurement device. When the measurement device receives the transmission request signal, the detail information transmission unit transmits the detail information which is requested to be transmitted to the information device.

According to this, before transmitting the detail information which takes time to be transferred from the measurement device to the information device, the title information which takes a shorter time to be transferred than the detail information can be transferred from the measurement device to the information device, and the title information can be displayed on the display unit of the information device. Therefore, it is not necessary for a user to wait for the completion of the transfer of the detail information, and a user can quickly check the title information of the detail information measured by the measurement device.

In addition, a user can select the detail information to be the transfer target by selecting the title information displayed on the display unit of the information device. Therefore, even in a case where a large number of detail information items not transmitted are stored in the measurement device, it is possible to transfer only the selected detail information and to quickly browse the detail information. Since a shorter time is taken for the transfer, compared to a case of transferring all of the detail information items not transmitted and stored in the measurement device, it is not necessary to pay attention to a distance between the measurement device and the information device not becoming longer, for a long time. Further, it is also possible to reduce a possibility of disconnection due to an effect of external noise or erroneous disconnection operation during the communication.

In addition, a user selects the title information displayed on the display unit of the information device, and the detail information is transmitted at a timing when the transfer operation is performed. Therefore, even in a case where a large number of detail information items not transmitted are stored in the measurement device, it is possible to avoid unintended communication for a long time due to the transfer of the detail information items.

In the measurement information management system according to the aspect of the invention described above, it is preferable that the measurement device further includes a measurement device side input unit which determines that a start operation and a completion operation of the measurement are performed, and outputs a measurement start signal and a measurement completion signal to the measurement unit, the detail information generation unit generates one detail information item including at least information measured by the measurement unit from a time point when the measurement start signal is output to a time point when the measurement completion signal is output, and the time information, the title information generation unit generates title information including elapsed time from a time point when the measurement start signal is output to a time point when the measurement completion signal is output, a movement distance of the measurement device, and date information of the time point when the measurement start signal or the measurement completion signal is output, and the display control unit displays the date information, the elapsed time, and the movement distance as the title information corresponding to each detail information item, on the display unit.

For example, in a case where a user runs or walks, the date information, the elapsed time, and the movement distance are information items which easily remain in the user's memory and are easily remembered by a user.

According to the configuration described above, since the date information, the elapsed time, and the movement distance are displayed on the display unit of the information device as the title information, a user can browse the information items and therefore can easily identify the detail information, compared to a case where only the number indicating the measurement order is displayed on the display unit as the title information, for example. By doing so, it is possible to easily perform the selection operation of the title information.

In the measurement information management system according to the aspect of the invention described above, it is preferable that the measurement device further includes a summary information generation unit which generates summary information representing a summary of the detail information, and a summary information transmission unit which transmits the summary information to the information device, the summary information includes the title information, the summary information generation unit includes the title information generation unit, and the summary information transmission unit includes a title information transmission unit.

According to the configuration described above, the summary information generation unit generates the summary information representing a summary of the detail information. The title information and another information item are included in this summary information. In a case where the measurement device is used in exercise such as running, for example, the other information item is calorie consumption or lap information. Since the generated summary information is transmitted to the information device by the summary information transmission unit, the other information item also can be displayed on the display unit before the information device receives the detail information. By doing so, a user can check the other information before the detail information is transmitted.

In the measurement information management system according to the aspect of the invention described above, it is preferable that the information device further includes a transfer time calculation unit which calculates an estimated transfer time necessary for transmitting the detail information from the measurement device to the information device, based on a data volume of the detail information and a communication speed set in advance, and the display control unit displays the title information and the estimated transfer time on the display unit.

According to the configuration described above, since the title information and the estimated transfer time are displayed on the display unit, a user can check in advance the time necessary for transmitting the detail information from the measurement device to the information device. Accordingly, as a user selects the title information by considering the estimated transfer time, the transfer of the detail information can be reliably executed in the time convenient for a user.

In the measurement information management system according to the aspect of the invention described above, it is preferable that the information device further includes a transfer time calculation unit which calculates an estimated transfer time necessary for transferring the detail information from the measurement device to the information device, based on a data volume of the detail information and a communication speed measured when the title information is transmitted from the measurement device to the information device, and the display control unit displays the title information and the estimated transfer time on the display unit.

According to the configuration described above, since the title information and the estimated transfer time are displayed on the display unit, a user can check in advance the time necessary for transmitting the detail information from the measurement device to the information device. Accordingly, as a user selects the title information by considering the estimated transfer time, the transfer of the detail information can be reliably executed in the time convenient for a user.

In the measurement information management system according to the aspect of the invention described above, it is preferable that the measurement information management system further includes a server which communicates with the information device, the information device further includes a title information transfer unit which transfers the title information transmitted from the measurement device, to the server, and a detail information transfer unit which transfers the detail information transmitted from the measurement device, to the server, the server includes a signal transmission unit which transmits a reception notification signal which notifies reception of the detail information transferred from the detail information transfer unit, to the information device, and the information device which receives the reception notification signal displays the title information transmitted from the measurement device, on the display unit.

According to the configuration described above, when the information device receives the title information from the measurement device, the title information transfer unit transfers the received title information to the server. When the server receives the title information transferred from the title information transfer unit, the signal transmission unit transmits the reception notification signal to the information device. When the information device receives the reception notification signal, the display control unit displays the title information received from the measurement device on the display unit. After that, when the information device receives the detail information transmitted from the measurement device, the detail information transfer unit transfers the received detail information to the server.

According to this, since the detail information is transferred to the server, it is possible to manage the detail information in the server. By doing so, it is possible to generate and analyze various information items based on the detail information in the server. That is, it is possible to use the data stored in the server. In addition, since it is possible to store the measurement information items in the server, it is possible to avoid capacity of the storage unit of the information device being occupied by the measurement information. Further, it is possible to browse the information items with other devices or to share the information items with other users, by accessing the server.

In the measurement information management system according to the aspect of the invention described above, it is preferable that the information device further includes a transfer time calculation unit which calculates an estimated transfer time necessary for transferring the detail information from the measurement device to the server through the information device, based on a communication speed set in advance, and the display control unit displays the title information and the estimated transfer time on the display unit.

According to the configuration described above, since the title information and the estimated transfer time are displayed on the display unit, a user can check in advance the time necessary for transferring the detail information from the measurement device to the server through the information device. Accordingly, as a user selects the title information by considering the estimated transfer time, the transfer of the detail information can be reliably executed in the time convenient for a user.

In the measurement information management system according to the aspect of the invention described above, it is preferable that the information device further includes a transfer time calculation unit which calculates an estimated transfer time necessary for transferring the detail information from the measurement device to the server through the information device, based on a measurement value of a communication speed, and the display control unit displays the title information and the estimated transfer time on the display unit.

According to the configuration described above, since the title information and the estimated transfer time are displayed on the display unit, a user can check in advance the time necessary for transferring the detail information from the measurement device to the server through the information device. Accordingly, as a user selects the title information by considering the estimated transfer time, the transfer of the detail information can be reliably executed in the time convenient for a user.

Another aspect of the invention is directed to a measurement device which performs wireless communication with an information device, the measurement device including: a storage unit; a clock unit which measures the time; a measurement unit which measures at least position information; a detail information generation unit which generates detail information including at least the position information corresponding to time information which is the time when the position information is measured; a storage control unit which stores the detail information in the storage unit; a title information generation unit which generates title information for identifying the detail information; a title information transmission unit which transmits the title information to the information device; and a detail information transmission unit which transmits the detail information to the information device according to a transmission request signal, when the transmission request signal of the detail information transmitted from the information device is received.

Still another aspect of the invention is directed to a measurement information management method of a measurement information management system including a measurement device including a storage unit, a clock unit which measures the time, and a measurement unit which measures at least position information, and an information device which performs wireless communication with the measurement device and includes a display unit and an input unit, the method including: generating detail information including at least the position information corresponding to time information which is the time when the position information is measured; storing the detail information in the storage unit; generating title information for identifying the detail information; transmitting the title information to the information device; displaying the title information transmitted from the measurement device on the display unit; causing the input unit to determine that a selection operation and a transfer operation of the title information to be a transfer target from the title information items displayed on the display unit are performed, and to output an operation signal; transmitting a transmission request signal of the detail information corresponding to the title information selected according to the operation signal to the measurement device; and transmitting the detail information to the information device according to the transmission request signal.

Yet another aspect of the invention is directed to a measurement information management program causing an information device which performs wireless communication with a measurement device including a clock unit which measures the time and a measurement unit which measures at least position information, and includes a display unit and an input unit, to execute: displaying title information on the display unit, when the title information for identifying detail information including at least the position information corresponding to time information which is the time when the position information is measured, is received; causing the input unit to determine that a selection operation and a transfer operation of the title information to be a transfer target from the title information items displayed on the display unit are performed, and to output an operation signal; transmitting a transmission request signal of the detail information corresponding to the title information selected according to the operation signal output by the input unit to the measurement device; and receiving the detail information requested in the transmitting of the transmission request signal, from the measurement device.

In the measurement device, the measurement information management method, and the measurement information management program according to the aspects of the invention, it is possible to improve convenience of the information device, in the same manner as in the measurement information management system.

### BRIEF DESCRIPTION OF THE DRAWINGS

The invention will be described with reference to the accompanying drawings, wherein like numbers reference like elements.
Fig. 1 is a block diagram showing a configuration of a measurement information management system according to a first embodiment.
Fig. 2 is a schematic view showing an appearance of a measurement device according to the embodiment of the invention.
Fig. 3 is a diagram showing an example of a summary information list screen according to the embodiment of the invention.
Fig. 4 is a diagram showing an example of a detail screen according to the embodiment of the invention.
Fig. 5 is a flowchart showing a measurement process executed by a measurement device.
Fig. 6 is a flowchart showing a transfer process of measurement information executed by a measurement information management system.
Fig. 7 is a diagram showing an example of a home screen according to the embodiment of the invention.
Fig. 8 is a diagram showing an example of an uploading screen according to the embodiment of the invention.
Fig. 9 is a block diagram showing a configuration of a measurement information management system according to a second embodiment.
Fig. 10 is a flowchart showing a transfer process of measurement information executed by a measurement information management system.
Fig. 11 is a flowchart showing a transfer process of measurement information executed by a measurement information management system.

### DESCRIPTION OF EXEMPLARY EMBODIMENTS

Hereinafter, embodiments of the invention will be described with reference to the drawings.

### First Embodiment

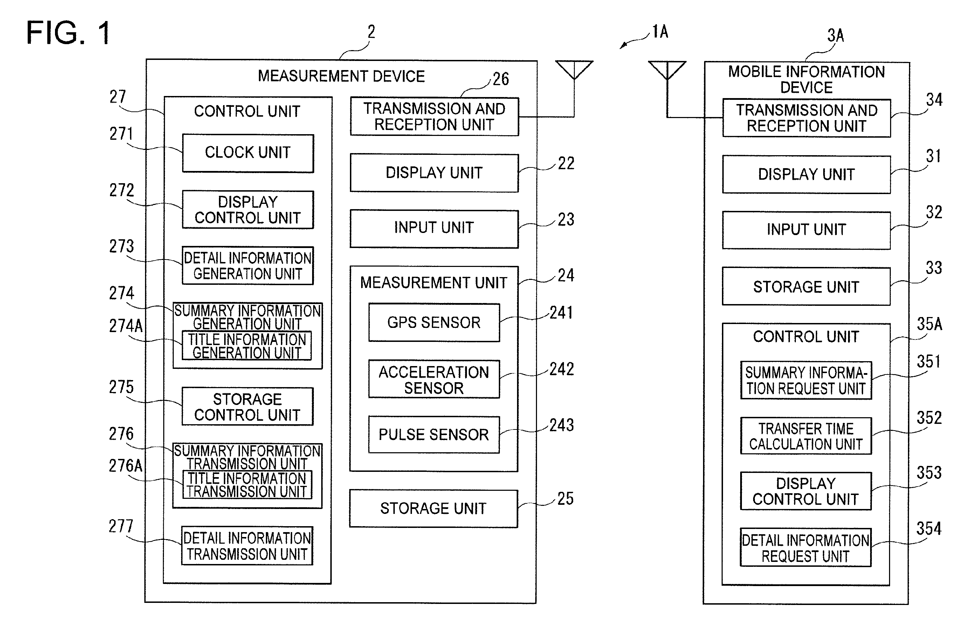

Fig. 1 is a block diagram showing a configuration of a measurement information management system 1A according to a first embodiment.

As shown in Fig. 1, the measurement information management system 1A includes a measurement device 2 and a mobile information device 3A. The measurement device 2 is a device in a shape of a watch, is worn on a user, and measures measurement values such as time information such as measurement starting time, running time, or elapsed time, position information (latitude and longitude) of a current location (that is, current location of a user), a movement distance, a movement speed, time, or calorie consumption of a user, pulse rate information or heart rate information of a user, or the like. The mobile information device 3A is, for example, a portable mobile type information device such as a mobile phone, a smart phone (multifunctional mobile phone), or a tablet. In the embodiment, a smart phone is used for the mobile information device 3A. Wireless communication is performed between the measurement device 2 and the mobile information device 3A, and the mobile information device 3A receives measurement information measured by the measurement device 2.

### Configuration of Measurement Information

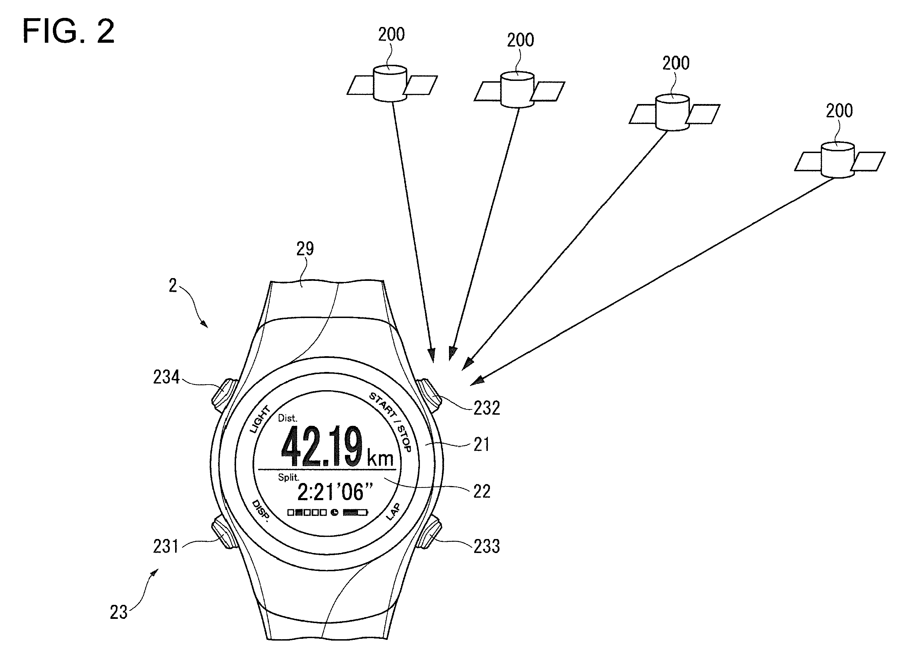

Fig. 2 is a schematic view showing an appearance of the measurement device 2.

The measurement device 2 includes a case 21 having a watch-shaped appearance, and a watchband 29 for the case 21 to be worn on a wrist of a user is provided on the case 21. In addition, the measurement device 2 includes a display unit 22, and an input unit 23 including buttons 231 to 234.

Further, as shown in Fig. 1, the measurement device 2 includes a measurement unit 24, a storage unit 25, a transmission and reception unit 26, and a control unit 27.

The display unit 22 is configured with a display panel such as a liquid crystal panel, an organic electro-luminescence (EL) panel, or an electrophoretic panel, and is provided on a front surface of the case 21. The measurement results such as the elapsed time or the movement distance are displayed on the display unit 22, by the control performed by the control unit 27 which will be described later.

The input unit 23 (measurement device side input unit) is configured to include four buttons 231 to 234 provided on an outer periphery of the case 21, and an operation signal corresponding to the buttons pressed down by a user is output to the control unit 27.

When the button 231 is pressed down, a process of switching a screen displayed on the display unit 22 to any one of a menu screen, a measurement screen, and a setting screen is executed. When the button 232 is pressed down in a state where the measurement screen is displayed, start, completion, and restart processes of the measurement are executed. When the button 233 is pressed down, a lap measurement process is executed when the measurement is performed, and a resetting process is executed when the measurement is stopped. When the button 234 is pressed down, a light for illuminating the display unit 22 is turned on.

The measurement unit 24 includes a GPS sensor 241, an acceleration sensor 242, and a pulse sensor 243, and outputs measurement signals of the sensors 241 to 243 to the control unit 27.

The GPS sensor 241 receives a GPS signal (satellite signal) from at least three GPS satellites 200 among a plurality of GPS satellites 200 (Fig. 2) going around satellites' orbits of the Earth, and operates and acquires the position information showing the current location of the measurement device 2 (that is, current location of a user). In addition, it is possible to operate and acquire not only the position information of the current location but also an altitude of the current location, by receiving the GPS signal from four or more GPS satellites 200.

The acceleration sensor 242 measures acceleration accompanying the movement of the measurement device 2.

The pulse sensor 243 is provided on a rear surface of the case 21, and comes in contact with a wrist of a user to measure a pulse rate of a user. In addition, in a case where it is difficult to embed the pulse sensor 243 in the case 21, a heart rate sensor may be used. The heart rate sensor is, for example, configured with a component independent from the case 21, and is worn by and comes in contact with a chest of a user to measure a heart rate of a user. Alternatively, both of the pulse sensor 243 and the heart rate sensor may be used.

The storage unit 25 is configured with a flash memory or the like, and stores various programs or information items (date of birth, gender, or physical information of a user) necessary for the measurement. In addition, the storage unit 25 stores detail information and summary information which will be described later and are generated based on the information measured by the measurement unit 24.

The transmission and reception unit 26 is a communication module which performs wireless communication with the external device such as the mobile information device 3A. The transmission and reception unit 26 transmits information input from the control unit 27 to the external device in which the communication connection is established, and also outputs the information received from the external device to the control unit 27.

In the embodiment, a module which is driven with low power is used for the transmission and reception unit 26. As an example of the transmission and reception unit 26 described above, a module supporting Bluetooth low energy (BLE) as one standard of Bluetooth (trademark) can be used. For example, in a case where BLE is introduced to the watch type measurement device 2, the communication speed in BLE may be approximately 10 kbps. This communication speed fluctuates depending on BLE introduction conditions in the measurement device 2 or the communication environment, but a long time is necessary for transmitting a large volume of data to the outside.

The control unit 27 controls the operation of the measurement device 2, and is configured to include an operation device such as a central processing unit (CPU). As the CPU executes a program stored in the storage unit 25, the control unit 27 functions as a clock unit 271, a display control unit 272, a detail information generation unit 273, a summary information generation unit 274, a storage control unit 275, a summary information transmission unit 276, and a detail information transmission unit 277.

The clock unit 271 measures the current time with an oscillation signal (reference signal: 1 Hz) output by a crystal oscillator. In addition, the clock unit 271 corrects the current time with the time information acquired from the GPS signals.

The display control unit 272 controls an operation of the display unit 22 and displays an operation state of the measurement device 2 or the measurement result. For example, as shown in Fig. 2, the movement distance and a split time (elapsed time) are displayed on the display unit 22.

The detail information generation unit 273 generates one detail information item including information measured by the measurement unit 24 from a time point when a measurement start signal is output from the input unit 23 to a time point when a measurement completion signal is output, and time information which is the time when this information is measured. For example, in a case where the measurement unit 24 performs the measurement every second, the detail information includes the time every second and the information measured by each sensor at that time. In a case where a measurement interval is previously set in the measurement device 2 before the measurement starts, the time at the time of the measurement by each sensor is informed by recording the measurement start time in the storage unit, and accordingly it is not necessary to record the time every second in the storage unit as the detail information.

Specifically, the detail information includes time information, GPS information (latitude, longitude, and altitude), distance information such as a speed and a movement distance, pitch information such as a frequency of a leg movement or a length of stride, and a pulse rate or a heart rate.

The summary information generation unit 274 generates summary information representing a summary of the detail information generated by the detail information generation unit 273.

The summary information is configured with split information and lap information.

The split information is a value derived by using a measurement value measured from the measurement start operation and to the measurement completion operation, and includes split time, a movement distance, the number of steps, calorie consumption, measurement start time, measurement completion time, a highest altitude, a lowest altitude, an altitude at a start point, an altitude at a finish point, a cumulative ascent altitude, a cumulative descent altitude, a pitch (maximum, minimum, and average), a length of stride (maximum, minimum, and average), a heart rate (maximum, minimum, and average), an average speed, an average pace, a date, or the like.

For example, the split time is the elapsed time from a time point when the measurement start signal is output from the input unit 23 to a time point when the measurement completion signal is output, the movement distance is a movement distance of the measurement device 2 during the elapsed time, and the date is a date at a time point when the measurement start signal or the measurement completion signal is output.

Herein, the split time, the movement distance, and the date included in the split information are displayed on the display unit 31 of the mobile information device 3A, and therefore function as title information for a user to identify the detail information. That is, the summary information generation unit 274 includes a title information generation unit 274A which generates the title information.

The lap information includes measured elapsed time in lap setting conditions (movement distance or elapsed time), a lap time, a lap distance (movement distance), the number of steps, calorie consumption, a cumulative ascent altitude, a cumulative descent altitude, an average speed, an average pace, a pitch, a length of stride, a pulse rate, or a heart rate. In addition, the lap information includes a number of laps for identifying the number of laps.

An index number is used in the identification of the detail information and the summary information in the measurement information management system 1A. In addition, other identifiers may be used instead of the index number.

The storage control unit 275 stores the detail information generated by the detail information generation unit 273 and the summary information generated by the summary information generation unit 274 in the storage unit 25.

The summary information transmission unit 276 transmits the summary information stored in the storage unit 25 (summary information not transmitted) to the mobile information device 3A, according to a transmission request signal of the summary information transmitted from the mobile information device 3A. That is, the summary information transmission unit 276 includes a title information transmission unit 276A which transmits the title information. In addition, the summary information transmission unit 276 transmits a data volume of each detail information item stored in the storage unit 25 (detail information not transmitted) to the mobile information device 3A, before transmitting the summary information.

The detail information transmission unit 277 transmits the detail information which is requested to be transmitted among the detail information items stored in the storage unit 25, to the mobile information device 3A, according to the transmission request signal of the detail information transmitted from the mobile information device 3A.

### Configuration of Mobile Information Device

The mobile information device 3A includes a display unit 31, an input unit 32, a storage unit 33, a transmission and reception unit 34, and a control unit 35A.

The display unit 31 includes a display panel, and displays a predetermined image by control of the control unit 35A.

The input unit 32 includes a button provided on an outer surface of a case of the mobile information device 3A, and a touch panel provided according to a display area of an image of the display unit 31. The input unit 32 outputs an operation signal corresponding to an input operation of a user with respect to the button and the touch panel to the control unit 35A.

The storage unit 33 is configured with a flash memory or the like, and stores various programs and information items necessary for the operation of the mobile information device 3A. This storage unit 33, for example, stores the detail information or the summary information received from the measurement device 2.

The transmission and reception unit 34 is a communication module for communicating with the measurement device 2 or the like. This transmission and reception unit 34 receives and transmits the information from and to the measurement device 2 or the like, by the control of the control unit 35A.

The control unit 35A controls the operation of the mobile information device 3A, and is configured with the CPU. As the CPU executes a program stored in the storage unit 33, the control unit 35A functions as a summary information request unit 351, a transfer time calculation unit 352, a display control unit 353, and a detail information request unit 354.

When the input unit 32 determines that an operation for receiving the summary information is performed and outputs an operation signal to the control unit 35A, the summary information request unit 351 controls the transmission and reception unit 34 and transmits the transmission request signal of the summary information to the measurement device 2.

The transfer time calculation unit 352 calculates an estimated transfer time necessary for transferring the detail information to the mobile information device 3A from the measurement device 2. The estimated transfer time is calculated based on the data volume (data size) of the detail information, and a communication speed measured when the summary information is transferred to the mobile information device 3A from the measurement device 2. In addition, the estimated transfer time can also be calculated based on the data volume of the detail information and the communication speed set in advance. The communication speed set in advance is, for example, 10 kbps.

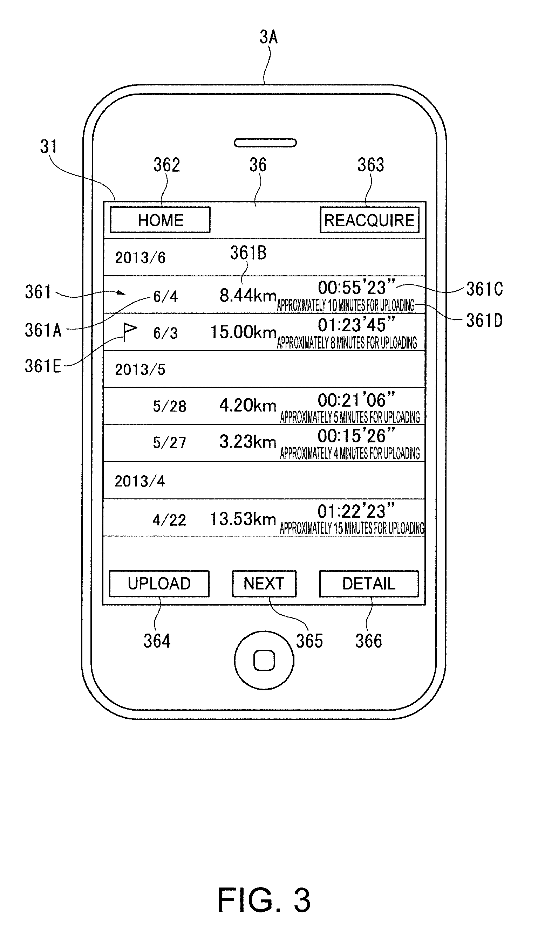

As shown in Fig. 3, the display control unit 353 generates a summary information list screen 36 showing a list of the summary information received from the measurement device 2, and displays the screen on the display unit 31. Five title information items 361 corresponding to five measurement data items (measurement values from the measurement start operation to the measurement stop operation) are displayed in a line in a longitudinal direction of the display unit 31, on the summary information list screen 36. One title information item 361 is configured with a date 361A, a movement distance 361B, and a split time 361C as default information items. In addition, an estimated transfer time 361D necessary for transferring the detail information calculated by the transfer time calculation unit 352 is displayed on the summary information list screen 36, in accordance with each measurement data item.

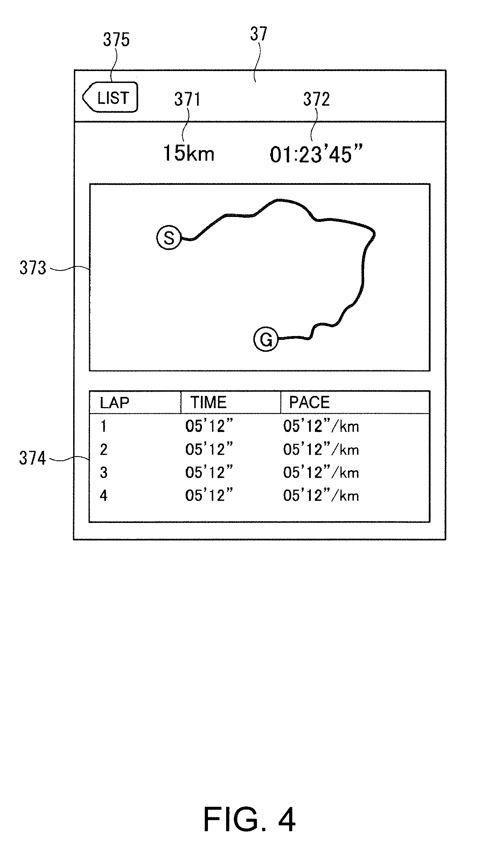

As shown in Fig. 4, the display control unit 353 can generate a detail screen 37 showing a detailed measurement result based on the summary information and the detail information received from the measurement device 2, and can display the screen on the display unit 31.

When the input unit 32 determines that a selection operation and a transmission operation of the title information to be a transmission target from the title information displayed on the summary information list screen 36 are performed, and outputs an operation signal to the control unit 35A, the detail information request unit 354 controls the transmission and reception unit 34, and transmits the transmission request signal of the detail information corresponding to the title information selected according to the operation signal, to the measurement device 2.

### Measurement Process

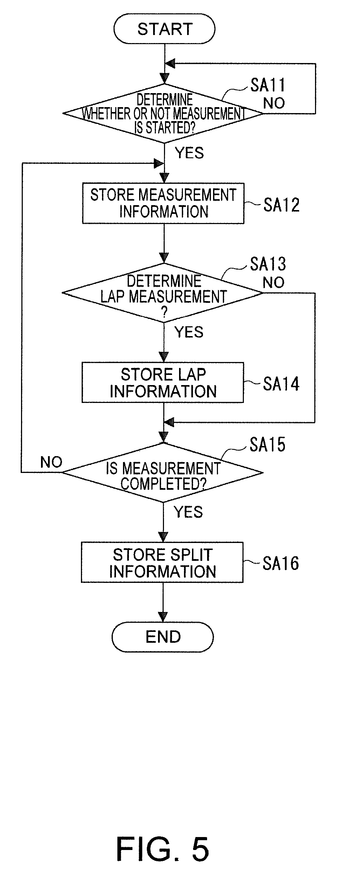

Fig. 5 is a flowchart showing a measurement process executed by the measurement device 2.

The control unit 27 determines whether or not the measurement start signal is output from the input unit 23 (SA11). When NO is determined in SA11, the control unit 27 performs the determination in SA11 again.

When YES is determined in SA11, the detail information generation unit 273 acquires the measurement start time, and the measurement unit 24 performs the measurement. The detail information generation unit 273 acquires the acquired measurement start time, the information measured by the measurement unit 24, and the time information obtained by measuring the information. The acquired information is stored in the storage unit 25 by the storage control unit 275 (SA12). When the measurement unit 24 performs the measurement at time intervals set in advance, it is possible to calculate the measurement time from the measurement start time and the time interval, and therefore the time information obtained by measuring the information may not be stored in the storage unit 25.

Next, the control unit 27 determines a lap measurement timing (SA13). In detail, when an operation signal for executing the lap measurement process is output from the input unit 23, or when the measurement device 2 is moved for a distance set in advance as the lap measurement interval, the control unit 27 can determine that the lap measurement timing has arrived. In addition, the lap measurement interval may be configured for determining that the lap measurement timing has arrived when the time set in advance has elapsed.

When YES is determined in SA13, the summary information generation unit 274 collects the information which is measured by the measurement unit 24 and stored in the storage unit 25, generates the lap information, and stores the generated lap information in a lap information storage area which is secured in advance in the storage unit 25 (SA14).

After the process in SA14 and when NO is determined in SA13, the control unit 27 determines whether or not the measurement completion signal is output from the input unit 23 (SA15). When NO is determined in SA15, the control unit 27 causes a process to return to SA12.

When YES is determined in SA15, the detail information generation unit 273 collects the information items which are measured by the measurement unit 24 and stored in the storage unit 25 to generate the split information, and stores the generated split information in a split information storage area which is secured in advance in the storage unit 25 (SA16), and the process ends.

With the processes described above, the split information, the lap information regarding the same number of laps as the number of times of the lap measurement, and the detail information having the data size corresponding to the measurement time are stored in the storage unit 25.

### Transfer Process

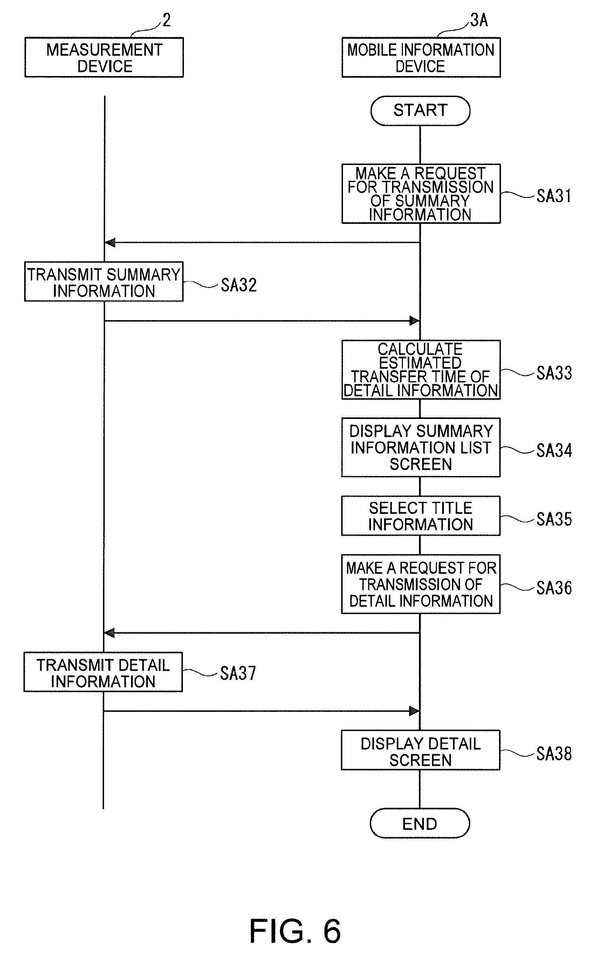

Fig. 6 is a flowchart showing a transfer process of the measurement information executed by the measurement information management system 1A. The detail information and the summary information are stored in the storage unit 25 of the measurement device 2.

In the mobile information device 3A, when the input unit 32 determines that an operation for receiving the summary information is performed and outputs an operation signal to the control unit 35A, the summary information request unit 351 transmits the transmission request signal for making a request for transmission of the summary information to the measurement device 2 (SA31). At that time, when the communication connection of BLE between the mobile information device 3A and the measurement device 2 fails, the failure of the communication connection is displayed on the display unit 31, a communication error is notified to a user by using an alarm sound or a voice, and accordingly it is possible to promote a user to retry the communication. When the measurement device 2 is verified in advance as a communication partner (when the measurement device and the mobile information device are paired), the mobile information device 3A may automatically transmit the transmission request signal of the summary information to the measurement device 2, as the measurement device 2 approaches.

When the measurement device 2 receives the transmission request signal of the summary information which is transmitted by the summary information request unit 351, the summary information transmission unit 276 transmits the summary information stored in the storage unit 25 (summary information not transmitted) to the mobile information device 3A (SA32). Herein, the summary information transmission unit 276 transmits the data volume (data size) of each detail information item stored in the storage unit 25 (summary information item not transmitted) to the mobile information device 3A, before transmitting the summary information.

When the mobile information device 3A receives the summary information which is transmitted by the summary information transmission unit 276, the transfer time calculation unit 352 calculates the estimated transfer time necessary for transmitting the corresponding detail information from the measurement device 2 to the mobile information device 3A, with respect to each summary information item (SA33).

The estimated transfer time is calculated based on the data volume of the detail information, and the communication speed measured when the summary information is transferred to the mobile information device 3A from the measurement device 2.

Next, as shown in Fig. 3, the display control unit 353 generates the summary information list screen 36 showing a list of the summary information received from the measurement device 2, and displays the screen on the display unit 31 (SA34).

As described above, the date 361A, the movement distance 361B, and the split time 361C which are the title information 361 displayed on the summary information list screen 36, function to allow a user to identify the detail information.

As described above, a user can identify the detail information generated by the measurement device 2, by monitoring the summary information list screen 36, and can select the detail information desired to be transferred by touching the title information 361 displayed on the summary information list screen 36. In addition, since the estimated transfer time 361D is displayed on the summary information list screen 36, a user can check the time taken for transferring the detail information.

Further, information (for example, calorie consumption) other than the date 361A, the movement distance 361B, and the split time 361C, or the lap information is displayed on the summary information list screen 36.

In addition to the title information 361, a "home" button 362, a "reacquire" button 363, an "upload" button 364, a "next" button 365, and a "detail" button 366 are displayed on the summary information list screen 36.

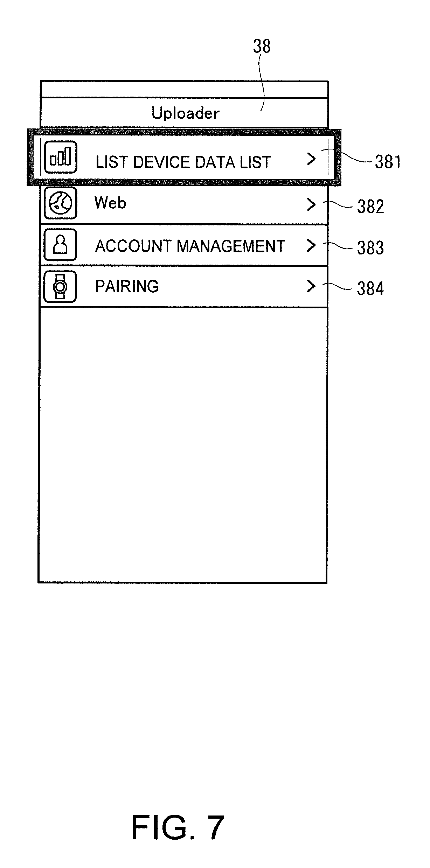

When a user touches (taps) the "home" button 362, the screen is switched to a home screen 38 shown in Fig. 7. A button 381 for displaying the summary information list screen, a button 382 for displaying a Web site, a button 383 for displaying an account management screen, and a button 384 for displaying a pairing setting screen are displayed on the home screen 38.

When a user touches the "reacquire" button 363, reacquisition of the summary information and the redisplay of the summary information list screen 36 are performed. When the summary information list screen 36 is provided with a plurality of screens, the page of the screen is switched to the next page when a user touches the "next" button 365.

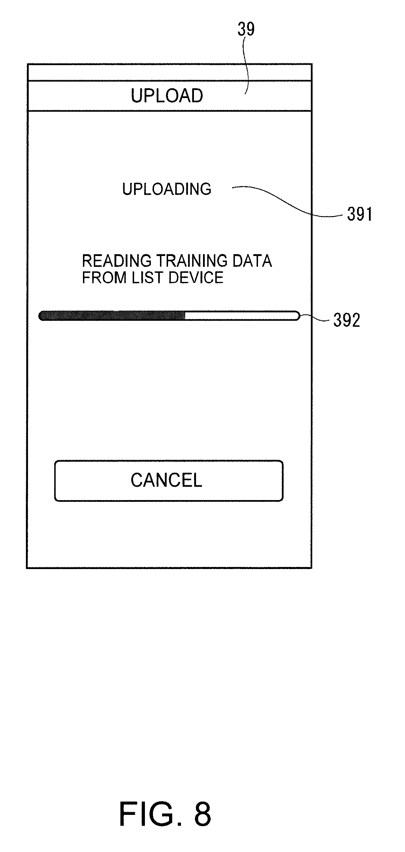

When a user touches the "upload" button 364, the screen is switched to an upload screen 39 shown in Fig. 8, and the transmission of the selected detail information from the measurement device 2 to the mobile information device 3A is started. A message 391 showing that the detail information is being transferred, and a gauge 392 representing remaining time until the transfer is completed, are displayed on the upload screen 39.

When a user touches the "detail" button 366, the detail screen 37 is displayed.

When a user touches the "upload" button 364 in a state where the title information which is a transfer target among the title information items 361 is touched and selected, the input unit 23 determines this operation and outputs the operation signal to the control unit 35A (SA35).

The detail information request unit 354 transmits the transmission request signal of the detail information corresponding to the selected title information 361, to the measurement device 2 (SA36).

When the measurement device 2 receives the transmission request signal of the detail information transmitted from the mobile information device 3A, the detail information transmission unit 277 transmits the detail information item which is requested to be transmitted among the detail information items stored in the storage unit 25, to the mobile information device 3A (SA37).

When the mobile information device 3A receives the detail information transmitted from the measurement device 2, the display control unit 353, as shown in Fig. 4, generates the detail screen 37 showing the detailed measurement result and displays the screen on the display unit 31, based on the detail information transmitted from the measurement device 2 and the summary information which is already received (SA38). In addition, the detail screen 37 may be configured so as to be displayed with an input operation by a user, without automatically transitioning.

A movement distance 371, a split time 372, map information 373, lap display information 374, and a "list" button 375 are displayed on the detail screen 37.

A map, a start point, a finish point, and a movement locus from the start point to the finish point shown on the map are displayed in the map information 373. In addition, the map information 373 may not be displayed.

A lap time and an average pace for each lap are displayed on the lap display information 374.

When a user touches the "list" button 375, the display screen is switched to the summary information list screen 36.

The title information is not deleted and continues to be displayed on the summary information list screen 36 shown in Fig. 3, even after the mobile information device 3A receives the detail information from the measurement device 2. In this case, an icon 361E indicating the completion of the reception of the detail information is displayed with respect to the corresponding title information. When a user touches the "detail" button 366 in a state where this title information is selected, the display control unit 353 displays the detail screen 37 shown in Fig. 4 on the display unit 31.

### Effects of First Embodiment

According to the embodiment described above, the following effects are obtained.

Before transmitting the detail information which takes time to be transferred from the measurement device 2 to the mobile information device 3A, the summary information which takes a shorter time to be transferred than the detail information is transferred from the measurement device 2 to the mobile information device 3A in SA32, and the summary information list screen 36 can be displayed on the display unit 31 of the mobile information device 3A in SA34. Therefore, it is not necessary for a user to wait for the completion of the transfer of the detail information, and a user can quickly check the summary of the detail information measured by the measurement device 2.

In addition, a user can select the detail information to be the transfer target by selecting the title information displayed on the summary information list screen 36 in SA35. Therefore, even in a case where a large number of detail information items not transmitted are stored in the measurement device 2, it is possible to transfer only the selected detail information and to quickly browse the detail screen 37. Since a shorter time is taken for the transfer, compared to a case of transferring all of the detail information items not transmitted and stored in the measurement device 2, it is not necessary to pay attention to a distance between the measurement device 2 and the mobile information device 3A not becoming longer, for a long time. Further, it is also possible to reduce a possibility of disconnection due to an effect of external noise or erroneous disconnection operation during the communication.

In addition, a user selects the title information displayed on the summary information list screen 36 in SA35, and the detail information is transmitted at a timing when a user touches the upload button. Therefore, even in a case where a large number of detail information items not transmitted are stored in the measurement device 2, it is possible to avoid unintended connection for a long time due to the transfer of the detail information items.

Since the date, the split time, and the movement distance are displayed on the summary information list screen 36 as the title information corresponding to each measurement data item, a user can browse the information items and therefore can easily identify the detail information, compared to a case where only the number indicating the measurement order is displayed as the title information, for example. The display order of the date, the split time, and the movement distance may be configured to be changed according to a user's taste. By doing so, a user also can easily recognize whether or not the data is the measurement data including the detail information which is desired to be checked. In addition, the display order of the title information 361 for each data item corresponding to each measurement data item (measurement value from the measurement start operation to the measurement stop operation) displayed as a list in a line in a longitudinal direction of the summary information list screen 36, may not be the order by date. For example, the information items may be displayed in the order by best measurement data. A user can easily recognize whether or not the data is the measurement data including the detail information which is desired to be checked in the same manner as described above. As described above, it is possible to easily perform the selection operation of the title information.

Since the summary information includes the calorie consumption or the lap information, in addition to the title information, it is possible to display the information items thereof on the display unit 31, before the mobile information device 3A receives the detail information. By doing so, a user can check the calorie consumption or the lap information before the detail information is transferred.

Since the estimated transfer time is displayed on the summary information list screen 36, a user can check in advance the time necessary for transmitting the detail information from the measurement device 2 to the mobile information device 3A. Accordingly, as a user selects the title information by considering the estimated transfer time, the transfer of the detail information can be reliably executed in the time convenient for a user.

### Second Embodiment

Next, a second embodiment of the invention will be described with reference to the drawings.

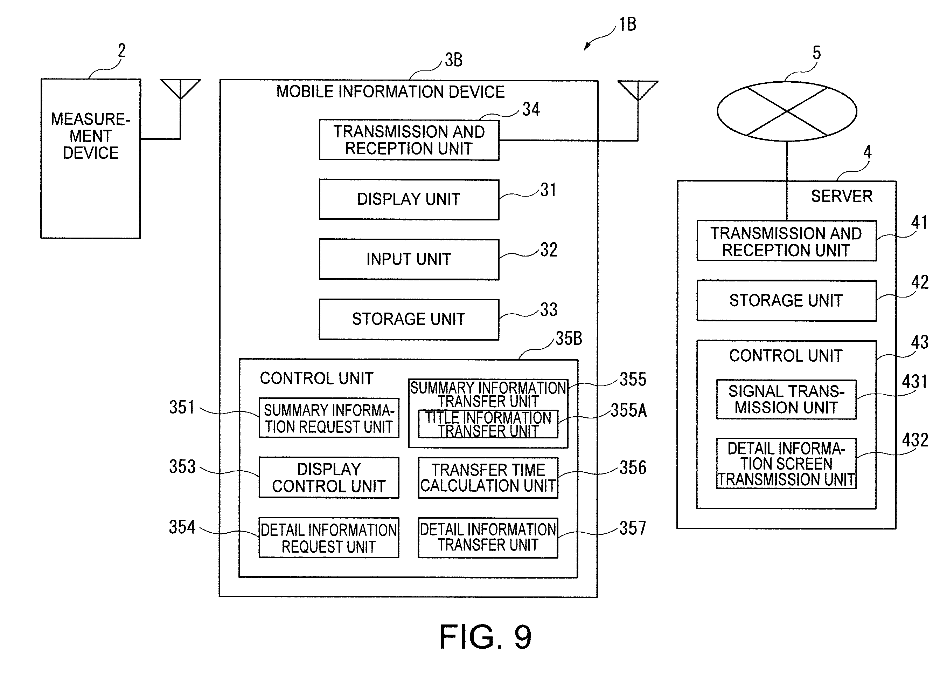

Fig. 9 is a block diagram showing a configuration of a measurement information management system 1B according to the second embodiment.

As shown in Fig. 9, a measurement information management system 1B of the second embodiment includes a mobile information device 3B, a network 5, and a server 4 connected to the network 5, in addition to the measurement device 2 having the same configuration as that of the first embodiment.

The wireless communication is performed between the measurement device 2 and the mobile information device 3B, and between the mobile information device 3B and the network 5. In addition, the wired communication may be performed between the mobile information device 3B and the network 5.

The mobile information device 3B receives the measurement information (summary information and detail information) measured by the measurement device 2 and then transmits the received measurement information to the server 4.

### Configuration of Mobile Information Device

The mobile information device 3B has a configuration of a control unit which is different from that of the mobile information device 3A of the first embodiment. That is, a control unit 35B of the mobile information device 3B includes a summary information transfer unit 355, a transfer time calculation unit 356, and a detail information transfer unit 357, in addition to the summary information request unit 351, the display control unit 353, and the detail information request unit 354 having the same configuration as those in the first embodiment.

The summary information transfer unit 355 controls the transmission and reception unit 34 such that it transfers the summary information received from the measurement device 2, to the server 4 through the network 5. That is, the summary information transfer unit 355 includes a title information transfer unit 355A which transfers the title information.

The transfer time calculation unit 356 calculates the estimated transfer time necessary for transmitting the detail information from the measurement device 2 to the server 4 through the mobile information device 3B. The estimated transfer time is the total time of the estimated transfer time between the measurement device 2 and the mobile information device 3B and the estimated transfer time between the mobile information device 3B and the server 4, and is calculated based on the measurement values of the communication speed. In addition, the estimated transfer time can be calculated based on the communication speed set in advance.

The detail information transfer unit 357 controls the transmission and reception unit 34 such that it transmits the detail information received from the measurement device 2 to the server 4 through the network 5.

### Configuration of Server

The server 4 includes a transmission and reception unit 41, a storage unit 42, and a control unit 43.

The storage unit 42 is configured with a hard disk drive (HDD) or a flash memory, and stores various programs and information items necessary for operating the server 4. The storage unit 42 stores the detail information or the summary information received from the measurement device 2 through the mobile information device 3B, for example.

The transmission and reception unit 41 is a communication module for communication with a terminal device of the mobile information device 3B through the network 5. The transmission and reception unit 41 transmits and receives the information to and from the terminal device, by the control of the control unit 43.

The control unit 43 controls the operation of the server 4, and is configured with a CPU. As the CPU executes a program stored in the storage unit 42, the control unit 43 functions as a signal transmission unit 431 and a detail screen information transmission unit 432.

When the summary information transferred from the mobile information device 3B is received, the signal transmission unit 431 transmits a reception notification signal notifying the reception of the summary information to the mobile information device 3B.

The detail screen information transmission unit 432 generates detail screen information showing a detail measurement result in a state to be easily understandable for a user, based on the summary information and the detail information transferred from the mobile information device 3B, and transmits the generated detail screen information to the mobile information device 3B.

### Transfer Process

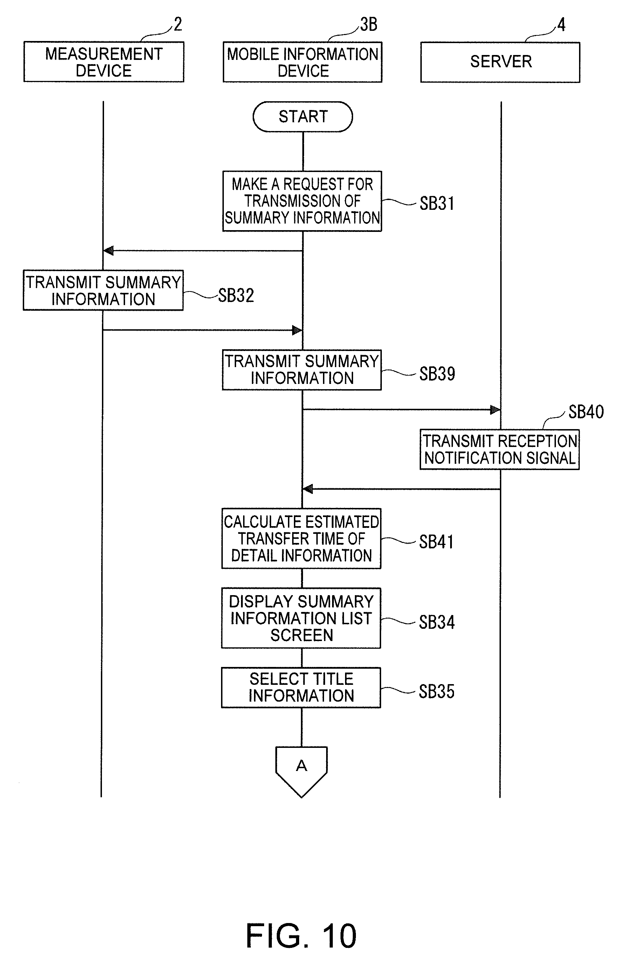

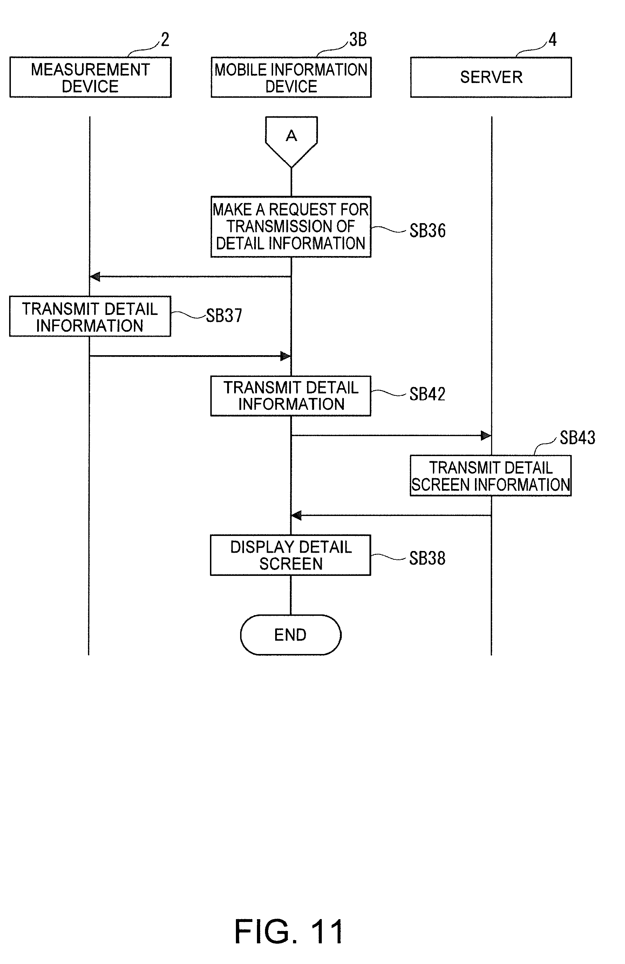

Figs. 10 and 11 are flowcharts showing a transfer process of the measurement information executed by the measurement information management system 1B. The summary information and the detail information are stored in the storage unit 25 of the measurement device 2.

As shown in Figs. 10 and 11, the measurement information management system 1B performs processes in SB31, SB32, and SB34 to SB43. Herein, the processes in SB31, SB32, and SB34 to SB38 are the same processes as in SA31, SA32, and SA34 to SA38 of the first embodiment, and therefore the description thereof will be omitted.

In the second embodiment, when the mobile information device 3B receives the summary information transmitted from the measurement device 2 in SB32, the summary information transfer unit 355 transfers the received summary information to the server 4 (SB39).

When the server 4 receives the summary information transferred from the mobile information device 3B, the signal transmission unit 431 transmits the reception completion signal to the mobile information device 3B (SB40).

When the mobile information device 3B receives the reception completion signal transmitted from the server 4, the transfer time calculation unit 356 calculates the estimated transfer time necessary for transmitting the corresponding detail information from the measurement device 2 to the server 4 through the mobile information device 3B, with respect to each summary information item received from the measurement device 2 (SB41).

The estimated transfer time is the total time of the estimated transfer time between the measurement device 2 and the mobile information device 3B and the estimated transfer time between the mobile information device 3B and the server 4, and is calculated based on the measurement values of the communication speed.

The calculated estimated transfer time is displayed on the summary information list screen 36 displayed in SB34.

In addition, in the second embodiment, when the mobile information device 3B receives the detail information transmitted from the measurement device 2 in SB37, the detail information transfer unit 357 transfers the received detail information to the server 4 (SB42).

When the server 4 receives the detail information transferred from the mobile information device 3B, the detail screen information transmission unit 432 generates the detail screen information showing a detailed measurement result based on the detail information transmitted from the mobile information device 3B and the summary information which is already received by the server, and transmits the generated detail screen information to the mobile information device 3B (SB43).

When the mobile information device 3B receives the detail screen information transmitted from the server 4, the display control unit 353 generates the detail screen 37 based on the received detail screen information, and can display the generated detail screen 37 on the display unit 31 in SB38.

The title information is not deleted and continues to be displayed on the summary information list screen 36, even after the transfer of the detail information from the measurement device 2 to the server 4 is completed. In this case, the icon 361E indicating the completion of the transfer of the detail information is displayed with respect to the corresponding title information. When a user touches the "detail" button 366 in a state where this title information is selected, the control unit 35B accesses the server 4 and receives the corresponding detail screen information from the server 4. The display control unit 353 generates the detail screen 37 based on the received detail screen information and displays the generated detail screen 37 on the display unit 31.

In addition, the title information may be deleted from the summary information list screen 36, after the transfer of the detail information from the measurement device 2 to the server 4 is completed.

By accessing the server 4 with the mobile information device 3B or other devices, it is possible to browse the detail information transferred to the server 4.

### Effects of Second Embodiment

According to the second embodiment described above, the same effects as in the first embodiment are obtained with the same configuration or process as in the first embodiment, and the following effects are obtained.

Since the detail information is transferred to the server 4, it is possible to manage the detail information in the server 4. By doing so, it is possible to generate and analyze various information items based on the detail information in the server 4. That is, it is possible to use the data stored in the server 4. In addition, since it is possible to store the measurement information items in the server 4, it is possible to avoid capacity of the storage unit 33 of the mobile information device 3B being occupied by the measurement information. Further, it is possible to browse the information items with other devices or to share the information items with other users, by accessing the server 4.

Since the estimated transfer time is displayed on the summary information list screen 36, a user can check in advance the time necessary for transferring the detail information from the measurement device 2 to the server 4 through the mobile information device 3B. Accordingly, as a user selects the title information by considering the estimated transfer time, the transfer of the detail information can be reliably executed in the time convenient for a user.

### Other Embodiments

The invention is not limited to the configurations of the embodiments described above, and various modifications can be performed within a scope of the invention.

For example, in the embodiments described above, the detail information includes the GPS information, the distance information, the pitch information, the heart rate, and the like, but may include at least the position information such as the GPS information.

In the embodiments described above, the title information includes the date, the movement distance, and the split time, but the invention is not limited thereto. For example, the title information may only include any one or two of the date, the movement distance, and the split time. In addition, the title information may be the number indicating the measurement order, for example, or position information of a specific point in a path from the start point to the finish point, which is information separate from the summary information. That is, the title information may be at least one information item which is measured by each sensor from the measurement start operation to the measurement completion operation of the measurement device 2, and which can designate the measurement data for one time of measurement recorded in the storage unit 25 (for example, data for one time of measurement recorded when running near the house).

In the embodiments, the estimated transfer time is calculated based on the measurement value of the communication speed when the summary information is transferred, but for example, in a case of continuously transferring the detail information, the estimated transfer time may be calculated based on the measurement value of the communication speed in the previous transfer of the detail information.

In the first embodiment, the mobile information device 3A calculates the estimated transfer time necessary for transmitting the detail information from the measurement device 2 to the mobile information device 3A, but the measurement device 2 may calculate the estimated transfer time. In this case, the calculated estimated transfer time is included in the summary information, for example, and is transmitted to the mobile information device 3A.

## Claims

1. A measurement information management system comprising:
a measurement device; and
an information device which communicates with the measurement device,
wherein the measurement device includes
a storage unit,
a clock unit which measures the time,
a measurement unit which measures position information,
a detail information generation unit which generates detail information including the position information corresponding to time information which is the time when the position information is measured,
a title information generation unit which generates title information for identifying the detail information, and
a detail information transmission unit which transmits the detail information to the information device according to a transmission request signal transmitted from the information device, and
the information device includes
a display unit,
a display control unit which displays the title information transmitted from the measurement device on the display unit,
an input unit which performs a selection operation and a transfer operation of the title information to be a transfer target from the title information items displayed on the display unit, and
a transmission unit which transmits the transmission request signal of the detail information corresponding to the title information subjected to the transfer operation by the input unit, to the measurement device.

2. The measurement information management system according to claim 1,
wherein the measurement device further includes
a measurement device side input unit which determines that a start operation and a completion operation of the measurement are performed,
a measurement device side control unit which outputs a measurement start signal and a measurement completion signal to the measurement unit,
the detail information generation unit generates the detail information including information measured by the measurement unit from a time point when the measurement start signal is output to a time point when the measurement completion signal is output, and the time information,
the title information generation unit generates title information including elapsed time from a time point when the measurement start signal is output to a time point when the measurement completion signal is output, a movement distance of the measurement device, and date information of the time point when the measurement start signal or the measurement completion signal is output, and
the display control unit displays at least one of the date information, the elapsed time, and the movement distance as the title information corresponding to each detail information item, on the display unit.

3. The measurement information management system according to claim 1 or 2,
wherein the measurement device further includes
a summary information generation unit which generates summary information representing a summary of the detail information, and
a summary information transmission unit which transmits the summary information to the information device,
the summary information includes the title information,
the summary information generation unit includes the title information generation unit, and
the summary information transmission unit includes a title information transmission unit which transmits the title information to the information device.

4. The measurement information management system according to any one of claims 1 to 3,
wherein the information device further includes a transfer time calculation unit which calculates an estimated transfer time necessary for transmitting the detail information from the measurement device to the information device, based on a data volume of the detail information and a communication speed set in advance, and
the display control unit displays the title information and the estimated transfer time on the display unit.

5. The measurement information management system according to any one of claims 1 to 3,
wherein the information device further includes a transfer time calculation unit which calculates an estimated transfer time necessary for transferring the detail information from the measurement device to the information device, and
the display control unit displays the title information and the estimated transfer time on the display unit.

6. The measurement information management system according to claim 5,
wherein the estimated transfer time is calculated based on the data volume of the detail information, and the communication speed measured when the title information is transmitted from the measurement device to the information device.

7. The measurement information management system according to any one of claims 1 to 3, further comprising:
a server which communicates with the information device,
wherein the information device further includes
a title information transfer unit which transfers the title information transmitted from the measurement device, to the server, and
a detail information transfer unit which transfers the detail information transmitted from the measurement device, to the server,
the server includes a signal transmission unit which transmits a reception notification signal which notifies reception of the detail information transferred from the detail information transfer unit, to the information device, and
the information device which receives the reception notification signal displays the title information transmitted from the measurement device, on the display unit.

8. The measurement information management system according to claim 7,
wherein the information device further includes a transfer time calculation unit which calculates an estimated transfer time necessary for transferring the detail information from the measurement device to the server through the information device, based on a communication speed set in advance, and
the display control unit displays the title information and the estimated transfer time on the display unit.

9. The measurement information management system according to claim 7,
wherein the information device further includes a transfer time calculation unit which calculates an estimated transfer time necessary for transferring the detail information from the measurement device to the server through the information device, based on a measurement value of a communication speed, and
the display control unit displays the title information and the estimated transfer time on the display unit.

10. A measurement device which communicates with an information device, the measurement device comprising:
a storage unit;
a clock unit which measures the time;
a measurement unit which measures position information;
a detail information generation unit which generates detail information including the position information corresponding to time information which is the time when the position information is measured;
a title information generation unit which generates title information for identifying the detail information;
a title information transmission unit which transmits the title information to the information device; and
a detail information transmission unit which transmits the detail information to the information device according to a transmission request signal, when the transmission request signal of the detail information transmitted from the information device is received.

11. A measurement information management method of a measurement information management system including a measurement device including a storage unit, a clock unit which measures the time, and a measurement unit which measures position information, and an information device which communicates with the measurement device and includes a display unit and an input unit, the method comprising:
generating detail information including at least the position information corresponding to time information which is the time when the position information is measured;
storing the detail information in the storage unit;
generating title information for identifying the detail information;
transmitting the title information to the information device;
displaying the title information transmitted from the measurement device on the display unit;
causing the input unit to determine that a selection operation and a transfer operation of the title information to be a transfer target from the title information items displayed on the display unit are performed, and to output an operation signal;
transmitting a transmission request signal of the detail information corresponding to the title information selected according to the operation signal to the measurement device; and
transmitting the detail information to the information device according to the transmission request signal.

12. A measurement information management program causing an information device which communicates with a measurement device including a clock unit which measures the time and a measurement unit which measures position information, and includes a display unit and an input unit, to execute:
displaying title information on the display unit, when the title information for identifying detail information including the position information corresponding to time information which is the time when the position information is measured, is received;
causing the input unit to determine that a selection operation and a transfer operation of the title information to be a transfer target from the title information items displayed on the display unit are performed, and to output an operation signal;
transmitting a transmission request signal of the detail information corresponding to the title information selected according to the operation signal output by the input unit to the measurement device; and
receiving the detail information requested in the transmitting of the transmission request signal, from the measurement device.

13. An information device which communicates with a measurement device, the information device comprising:
a display unit;
a display control unit which displays title information transmitted from the measurement device on the display unit;
an input unit which performs a selection operation and a transfer operation of the title information to be a transfer target from the title information items displayed on the display unit; and
a transmission unit which transmits the transmission request signal of the detail information corresponding to the title information subjected to the transfer operation by the input unit, to the measurement device.
